# EUROPÄISCHE PATENTSCHRIFT

(11) **EP 3 700 325 B1**
(45) Veröffentlichungstag und Bekanntmachung des Hinweises auf die Patenterteilung: **09.06.2021**
(21) Anmeldenummer: 17794940.1
(22) Anmeldetag: 26.10.2017
(51) Int. Cl.: A01D 87/02, A01D 43/08

(54) **ÜBERLADEVORRICHTUNG ZUM SEITLICH VERSETZTEN AUFSAMMELN UND ÜBERGEBEN VON ERNTEGUT AN EINEN TRANSPORTWAGEN**
LOAD TRANSFER DEVICE FOR LATERALLY OFFSET COLLECTION AND TRANSFER OF HARVESTED MATERIAL TO A TRANSPORT VEHICLE
DISPOSITIF DE CHARGEMENT DESTINÉ À RAMASSER ET À LIVRER DE MANIÈRE DÉCALÉE LATÉRALEMENT UNE RÉCOLTE DANS UN CHARIOT DE TRANSPORT

(43) Veröffentlichungstag der Anmeldung: 02.09.2020
(73) Patentinhaber: Fliegl Agrartechnik GmbH, 84453 Mühldorf am Inn (DE)
(72) Erfinder: FLIEGL, Josef, Sr., 84556 Kastl (DE)
(74) Vertreter: Nußbaum, Christopher
(86) Internationale Anmeldenummer: PCT/EP2017/077470
(87) Internationale Veröffentlichungsnummer: WO 2019/081029

(56) Entgegenhaltungen:
- EP-A2- 1 779 716
- CH-A- 359 312
- DE-U1-202012 103 905
- US-A1- 2010 193 411

## Beschreibung

Die Erfindung betrifft eine Überladevorrichtung zum seitlich versetzten Aufsammeln und Übergeben von Erntegut an einen Transportwagen.

In der Landwirtschaft muss unterschiedlichstes Erntegut aufgesammelt und abtransportiert werden. Unter anderem wird oftmals halmgutartige Biomasse, insbesondere in Form von Stroh oder anderweitigen Gräseraufkommen, von Feldern aufgesammelt und wegtransportiert. Derartige halmgutartige Biomasse kann feuchtes, angewelktes und trockenes Gras, also Heu, sein, aber auch Getreidestroh.

Es ist weit verbreitet, Getreidestroh oder auch andere halmgutartige Biomasse mittels sogenannter Rundballenpressen aufzusammeln und zu Ballen zu pressen. Derartige Rundballenpressen werden üblicherweise von einem Traktor gezogen und über eine Zapfwelle des Traktors angetrieben. Solche Rundballenpressen sind beispielsweise in der DE 10 2011 109 890 A1 oder in der DE 33 13 883 A1 gezeigt.

Die DE 20 2012 103 905 U1 zeigt eine mobile Überladestation zum Überladen von Ladegut. Eine an einen Aufnahmebehälter angrenzende Seitenwand kann in eine waagrechte Stellung heruntergeklappt werden. Die Seitenwand ist mit einer Fördereinrichtung ausgestattet, auf der das Ladegut abgeladen werden und dann in Richtung des Aufnahmebehälters befördert werden kann. Im Aufnahmebehälter befindet sich eine Förderschnecke, mittels welcher das Ladegut zu einer Hochfördereinrichtung befördert werden kann. Die Hochfördereinrichtung kann das Ladegut schräg nach oben befördern.

Darüber hinaus ist es auch durchaus gängig, Halmgut direkt mittels dafür geeigneter, meistens mittels Zugmaschinen in Form von Traktoren oder dergleichen gezogener Ladewagen vom Boden aufzusammeln und dann mit denselben Ladewagen abzutransportieren. Um dies zu ermöglichen, weisen solche Ladewagen üblicherweise Aufsammeleinheiten zum Aufsammeln des Ernteguts vom Boden und oftmals auch Schneideinheiten zum Zerschneiden des aufgesammelten Ernteguts auf. Nachteilig bei dieser Vorgehensweise ist, dass während des Abtransports des aufgenommenen Ernteguts mittels des Ladewagens dieser nicht mehr dazu eingesetzt werden kann, weiteres Erntegut einzusammeln.

Es ist die Aufgabe der vorliegenden Erfindung, eine Lösung bereitzustellen, mittels welcher auf besonders effiziente Weise Erntegut, insbesondere halmgutartige Biomasse, aufgesammelt und abtransportiert werden kann.

Diese Aufgabe wird durch eine Überladevorrichtung zum Aufsammeln und Übergeben von Erntegut an einen Transportwagen, insbesondere von halmgutartiger Biomasse, mit den Merkmalen des Patentanspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Überladevorrichtung zum seitlich versetzten Aufsammeln und Übergeben von Erntegut, insbesondere von halmgutartiger Biomasse, an einen Transportwagen umfasst eine verschwenkbare Einheit zum seitlich versetzten Aufnehmen des Ernteguts vom Boden und zum Befördern des Ernteguts zu einer zum Zerkleinern des Ernteguts ausgelegten Zerkleinerungseinheit, wobei die verschwenkbare Einheit zwischen einer in Richtung des Bodens nach unten sowie seitlich ausgeklappten Gebrauchsposition und einer nach oben sowie seitlich angeklappten Verstauposition verschwenkbar ist. Des Weiteren weist die Überladevorrichtung einen Zwischenspeicher zum Aufnehmen des zerkleinerten Ernteguts sowie eine im Zwischenspeicher angeordnete Fördereinrichtung zum Befördern des zerkleinerten Ernteguts aus dem Zwischenspeicher zu einer Überladeeinheit der Überladevorrichtung auf, mittels welcher das zerkleinerte Erntegut in einen Laderaum des seitlich neben der Überladevorrichtung angeordneten Transportwagens, insbesondere über eine Laderaumwand des Laderaums hinweg, beförderbar ist.

Gemäß einem alternativen unabhängigen Aspekt der Erfindung kann es auch vorgesehen sein, dass die Überladevorrichtung die Zerkleinerungseinheit nicht umfasst. In dem Fall kann das mittels der verschwenkbaren Einheit aufgenommene Erntegut unzerkleinert, insbesondere ungeschnitten, direkt dem Zwischenspeicher zugeführt werden. In dem Fall wird also das ungeschnittene bzw. nicht zerkleinerte Erntegut mittels der Fördereinrichtung aus dem Zwischenspeicher zur Überladeeinheit und mittels dieser in den Laderaum des Transportwagens befördert.

Bei der erfindungsgemäßen Lösung ist es also vorgesehen, dass die Überladevorrichtung das Aufsammeln und Übergeben des Ernteguts übernimmt, wobei den eigentlichen Abtransport des Ernteguts ein Transportwagen übernehmen kann, der während des Überladevorgangs neben der Überladevorrichtung fährt. Die erfindungsgemäße Überladevorrichtung kann also quasi kontinuierlich dafür genutzt werden, Erntegut, insbesondere in Form von halmgutartiger Biomasse, beispielsweise von einem Feld aufzusammeln, zu zerkleinern und zwischenzulagern. Sofern ein Transportwagen gerade in der Nähe sein sollte, kann dieser parallel zur Überladevorrichtung fahren und mittels der Überladeeinheit der Überladevorrichtung befüllt werden. Sollte der betreffende Transportwagen, insbesondere dessen Laderaum, vollständig befüllt worden sein, so kann der nächste Transportwagen an die Überladevorrichtung herangefahren werden, um dann diesen Transportwagen zu befüllen.

Während des Wechsels der Transportwagen kann mittels der Überladevorrichtung weiterhin Erntegut vom Boden aufgesammelt, zerkleinert und in den Zwischenspeicher der Überladevorrichtung befördert werden. Einzig die im Zwischenspeicher angeordnete Fördereinrichtung sowie die Überladeeinheit werden während des Wechsels der Transportwagen gestoppt, wobei das Erntegut weiterhin aufgenommen und zwischengelagert werden kann. Dadurch fallen keine Standzeiten bzw. keine Stillstandzeiten beim Wechsel von Transportwagen an. Mit anderen Worten ist es mittels der erfindungsgemäßen Überladevorrichtung also möglich, dass die Überladevorrichtung, beispielsweise durch einen Traktor oder ein anderes Zugfahrzeug gezogen oder getragen, durchgehend betrieben wird, um Erntegut vom Boden aufzusammeln, zu zerkleinern und in dem Zwischenspeicher zwischenzulagern. Durch das Vermeiden von unnötigen Standzeiten bzw. Stillstandzeiten der Überladevorrichtung sind sehr hohe Flächenleistungen möglich.

Darüber hinaus bringt die erfindungsgemäße Lösung noch einen weiteren Vorteil mit sich. Beispielsweise bei engen Kurvenfahrten braucht ein mittels der Überladevorrichtung zu beladender Transportwagen nicht dicht an der Überladevorrichtung zu fahren, da das Überladen vorzugsweise vor engen Kurven, besonders bevorzugt also schon während der Geradeausfahrt, gestoppt wird, wobei das Erntegut weiterhin mittels der Überladevorrichtung aufgenommen und zwischengespeichert wird. Sobald die Überladevorrichtung sich wieder auf einer geraden Strecke befindet, kann das zwischengespeicherte und zerkleinerte Erntegut an den betreffenden Transportwagen übergeben werden. Dadurch kann sichergestellt werden, dass so gut wie kein Erntegut verlorengeht, auch wenn engste Kurven mittels der Überladevorrichtung durchfahren werden müssen.

Durch die erfindungsgemäß vorgesehene verschwenkbare Einheit muss ein beispielsweise die Überladevorrichtung ziehendes Zugfahrzeug nicht über das aufzusammelnde Erntegut, z.B. in Form einer sogenannten Schwad angeordnet, fahren. Stattdessen kann das Zugfahrzeug seitlich versetzt zum aufzusammelnden Erntegut fahren, während die verschwenkbare Einheit in ihrer in Richtung des Bodens nach unten sowie seitlich ausgeklappten Gebrauchsposition das Erntegut aufnehmen kann. Zudem kann die verschwenkbare Einheit auch relativ breit gestaltet werden, da diese insbesondere bei Fahrten über öffentliche Straßen in ihre nach oben sowie seitlich angeklappte Verstauposition bewegt werden kann. Auf öffentlichen Straßen baut also die Überladevorrichtung nicht breiter als gesetzlich erlaubt, wobei beispielsweise auf einem Feld während der Aufnahme des Ernteguts durch seitliches Herunterschwenken der verschwenkbaren Einheit eine besonders große Arbeitsbreite realisiert werden kann. Ferner ergibt sich durch die verschwenkbare Einheit auch eine bessere Sicht, beispielsweise bei einem Fahrer eines Traktors, mittels welchem die Überladevorrichtung gezogen wird, während die verschwenkbare Einheit in ihrer ausgeklappten Gebrauchsposition angeordnet ist.

Eine vorteilhafte Ausführungsform der Erfindung sieht vor, dass die verschwenkbare Einheit eine Fördereinrichtung zum Befördern des Ernteguts zur Zerkleinerungseinheit aufweist. Bei der Fördereinrichtung der verschwenkbaren Einheit kann es sich beispielsweise um ein Förderband handeln, mittels welchem das Erntegut in Richtung der Zerkleinerungseinheit befördert werden kann. Die Fördereinrichtung kann sich beispielsweise im Wesentlichen über die gesamte Breite der verschwenkbaren Einheit erstrecken, sodass besonders großflächig das Erntegut aufgenommen und befördert werden kann.

Eine weitere vorteilhafte Ausführungsform der Erfindung sieht vor, dass in der Gebrauchsstellung der verschwenkbaren Einheit die Fördereinrichtung der verschwenkbaren Einheit und die im Zwischenspeicher angeordnete Fördereinrichtung miteinander fluchten. Beispielsweise kann die im Zwischenspeicher angeordnete Fördereinrichtung einen Kratzboden aufweisen. Durch die vorzugsweise miteinander fluchtende Anordnung der beiden Fördereinrichtungen kann das aufgenommene Erntegut besonders kontinuierlich und damit auch schnell bei Bedarf zunächst zur Zerkleinerungseinheit, von dieser in den Zwischenspeicher und von dort zur Überladeeinheit und letztlich in den Laderaum des betreffenden Transportwagens befördert werden. Dabei fördern die beiden Fördereinrichtungen vorzugsweise quer zur Fahrtrichtung der Überladevorrichtung.

In weiterer vorteilhafter Ausgestaltung der Erfindung ist es vorgesehen, dass die im Zwischenspeicher angeordnete Fördereinrichtung eine im Bereich einer Ladefläche des Zwischenspeichers angeordneten Kratzboden aufweist, mittels welchem das im Zwischenspeicher aufgenommene zerkleinerte Erntegut in Richtung der Überladeeinheit beförderbar ist. Andere Arten von Fördereinrichtungen sind selbstverständlich auch möglich. Insbesondere mittels des Kratzbodens kann das Erntegut besonders einfach und zuverlässig vom Zwischenspeicher in Richtung der Überladeeinheit befördert werden.

Zudem kann es vorgesehen sein, dass die im Zwischenspeicher angeordnete Fördereinrichtung wenigstens eine an einer der Überladeinheit zugewandten Seite des Zwischenspeichers angeordnete Dosierwalze aufweist, mittels welcher das im Zwischenspeicher vorhandene Erntegut in Richtung der Überladeinheit beförderbar ist. Vorzugsweise sind mehrere dieser Dosierwalzen in Hochrichtung der Überladevorrichtung übereinander angeordnet. Mittels der übereinander angeordneten Dosierwalzen ist es zuverlässig möglich, insbesondere bei zunehmendem Füllstand des Zwischenspeichers, das zerkleinerte Erntegut in Richtung der Überladeeinheit zu befördern.

Gemäß einer weiteren vorteilhaften Ausführungsform der Erfindung ist es vorgesehen, dass die im Zwischenspeicher angeordnete Fördereinrichtung eine den Zwischenspeicher begrenzende Wand aufweist, welche in Richtung der Überladeinheit aus- und einfahrbar ist. Vorzugsweise ist die Wand um eine Achse verschwenkbar gelagert, welche in Querrichtung der Überladevorrichtung verläuft. Beispielsweise kann die Wand mittels Hydraulikzylindern verschwenkt werden, und zwar derart, dass sie entweder von der Überladeinheit weg oder auf diese zu geschwenkt wird. Dadurch kann auf besonders einfache Weise der Aufnahmeraum des Zwischenspeichers variiert werden. Wird die verschwenkbare Wand in Richtung der Überladeinheit geschwenkt, so wird das im Zwischenspeicher aufgenommene und zerschnittene Erntegut in den Eingriffsbereich der Überladeinheit gedrückt. Alternativ ist es auch möglich, dass die begrenzende Wand beispielsweise als Ganzes in Form einer eine Art Abschiebewand translatorisch bewegbar ist, um das im Zwischenspeicher aufgenommene zerschnittene Erntegut in den Eingriffsbereich der Überladeinheit zu verbringen. Vorzugsweise ist es vorgesehen, dass entweder ein Kratzboden oder die begrenzende Wand eingesetzt wird, welche in Richtung der Überladeinheit aus- und einfahrbar ist. Die Dosierwalzen werden vorzugsweise in beiden Fällen verwendet. Grundsätzlich ist es aber auch möglich, dass Kratzböden, Dosierwalzen und aus- und einfahrbare Wände in Kombination verwendet werden.

Eine weitere vorteilhafte Ausführungsform der Erfindung sieht vor, dass der Zerkleinerungseinheit eine Presse zum Verdichten des Ernteguts vorgeschaltet ist. Wird beispielsweise Gras mittels der Zerkleinerungseinheit zerkleinert, insbesondere zerschnitten, so kann durch die Verdichtung eine besonders hohe Schnittqualität erzielt werden. Insgesamt ergibt sich durch die der Zerkleinerungseinheit vorgeschalteten Presse ein besonders einfacher und zuverlässiger Zerkleinerungsvorgang hinsichtlich des aufgenommenen Ernteguts.

In weiterer vorteilhafter Ausgestaltung der Erfindung ist es vorgesehen, dass die Presse zum Verdichten des Ernteguts in Richtung der Fördereinrichtung der verschwenkbaren Einheit bewegbar ist. Handelt es sich bei der Fördereinrichtung der verschwenkbaren Einheit beispielsweise um ein Förderband, so kann die Presse von oben nach unten in Richtung des Förderbands abgesenkt werden, um auf dem Förderband liegendes Erntegut zu verdichten bzw. zu verpressen, bevor dieses dann nach dem Durchlaufen der Presse in Richtung der Zerkleinerungseinheit weiter befördert wird, mittels welcher das verdichtete Erntegut dann beispielsweise gehäckselt oder geschnitten oder anderweitig zerkleinert wird. Ein Abstand zwischen der Presse und der Fördereinrichtung kann dabei beispielsweise variabel einstellbar sein, sodass je nach zu verdichtendem und anschließend zu zerkleinerndem Erntegut ein passender Abstand zwischen der Presse und der Fördereinrichtung eingestellt werden kann, in Folge dessen dann auch ein Grad der Verpressung passgenau eingestellt werden kann. Es ist auch möglich, dass nach der Fördereinrichtung der verschwenkbaren Einheit, also bezogen auf die Förderrichtung der Fördereinrichtung, ein Bereich zum Verpressen des Ernteguts vorgesehen ist. In dem Fall kann die Presse beispielsweise in Richtung dieses Bereichs abgesenkt werden, um das Erntegut vor dem Erreichen der Zerkleinerungseinheit zu verpressen.

Eine weitere vorteilhafte Ausführungsform der Erfindung sieht vor, dass die verschwenkbare Einheit eine mit Aufnahmezinken versehene Walze zum Aufsammeln des Ernteguts vom Boden aufweist. Mit anderen Worten kann die verschwenkbare Einheit eine sogenannte Pick-Up-Einheit aufweisen, mittels welcher beispielsweise Gras oder dergleichen besonders einfach aufgesammelt werden kann. Wird beispielsweise die Überladevorrichtung entlang und über eine Schwad bewegt, so kann durch die mit den Aufnahmezinken versehene Walze besonders einfach Erntegut aufgenommen und vorzugsweise auf die besagte Fördereinrichtung der verschwenkbaren Einheit befördert werden, mittels welcher das aufgenommene Erntegut dann wiederum in Richtung der Zerkleinerungseinheit befördert wird.

Eine weitere vorteilhafte Ausführungsform der Erfindung sieht vor, dass die verschwenkbare Einheit ein Mähwerk zum Mähen und anschließendem Aufnehmen des Ernteguts vom Boden aufweist. Mittels der Überladevorrichtung kann in dem Fall also gleichzeitig auch das aufzunehmende Erntegut vorher noch gemäht und dann in einem einzigen Arbeitsschritt aufgenommen werden. Beispielsweise ist es auch denkbar, dass die mit den Aufnahmezinken versehende Walze und das Mähwerk austauschbar gestaltet sind, sodass die verschwenkbare Einheit je nach Bedarf mit dem Pick-Up-System oder mit dem Mähwerk versehen werden kann.

Gemäß einer weiteren vorteilhaften Ausführungsform der Erfindung ist es vorgesehen, dass die Zerkleinerungseinheit eine mit Förderzinken versehende rotierbare Walze aufweist, welche mit feststehenden Schneidmessern, die vorzugsweise in Kanälen angeordnet sind, zusammenwirkt. Eine Drehachse der Walze verläuft dabei vorzugsweise quer zur Förderrichtung der im Zwischenspeicher angeordneten Fördereinrichtung. Sobald die mit den Förderzinken versehene Walze in Rotation versetzt wird, fördern die Förderzinken das Erntegut in Richtung der feststehenden Schneidmesser, wodurch das aufgenommene Erntegut zerschnitten und danach dem Zwischenspeicher zugeführt wird.

Eine weitere vorteilhafte Ausführungsform der Erfindung sieht vor, dass die Zerkleinerungseinheit einen Häcksler aufweist. Mittels des Häckslers ist es ebenfalls möglich, das aufgenommene Erntegut wunschgemäß zu zerkleinern. Es kann auch vorgesehen sein, dass die Überladevorrichtung derart ausgebildet ist, dass der Schneidrotor gegen den Häcksler und umgekehrt ausgetauscht werden kann, sodass je nach zu zerkleinerndem Erntegut das passende Schneidwerk eingesetzt werden kann.

In weiterer vorteilhafter Ausgestaltung der Erfindung ist es vorgesehen, dass die Überladeeinheit in einer eingeklappten Nichtgebrauchsstellung und in einer ausgeklappten Überladestellung positionierbar ist. Beispielsweise kann die Überladeeinheit aus mehreren klappbaren Segmenten ausgebildet sein, welche beispielsweise mittels geeigneter Hydraulikzylinder ausgefahren und eingefahren bzw. eingeklappt und ausgeklappt werden können. So ist es beispielsweise denkbar, dass die Überladeeinheit in ihrer eingeklappten Nichtgebrauchsstellung an den Zwischenspeicher heran oder sogar zumindest teilweise in diesen hinein geklappt werden kann, sodass in der Nichtgebrauchsstellung die Überladeeinheit bezogen auf die Querrichtung der Überladevorrichtung und vorzugsweise auch bezogen auf die Hochrichtung der Überladevorrichtung kompakt verstaut werden kann. Wird dann die Überladeeinheit während des Betriebs der Überladevorrichtung zum Befüllen des Transportwagens benötigt, so kann die Überladevorrichtung beispielsweise wiederum hydraulisch nach außen und nach oben ausgeklappt werden.

Gemäß einer weiteren vorteilhaften Ausführungsform der Erfindung ist es vorgesehen, dass die Überladeeinheit zum Befördern des zerkleinerten Ernteguts in den Laderaum des Transportwagens ein Förderband, einen Schneckenförderer und/oder ein Gebläse mit einem daran angeschlossenen Beförderungsrohr aufweist. So ist es möglich, mittels der Überladeeinheit das zerkleinerte Erntegut auf einfache Weise dem Laderaum des betreffenden Transportwagens zuzuführen.

Eine weitere vorteilhafte Ausführungsform der Erfindung sieht vor, dass die Überladevorrichtung einen Anhänger, ein Aufbau für ein Fahrzeug oder ein Kraftfahrzeug ist. Im Falle eines Anhängers kann die Überladevorrichtung beispielsweise eine Achse mit daran angeordneten Rädern sowie eine Deichsel aufweisen, sodass die Überladevorrichtung ganz einfach an ein Zugfahrzeug, beispielsweise an einen Traktor, angehängt werden kann. Alternativ ist es auch möglich, dass die Überladevorrichtung als eine Art Aufbau für ein Fahrzeug ausgebildet ist, sodass die Überladevorrichtung beispielsweise auf ein Fahrwerk oder auch auf eine Ladefläche des betreffenden Fahrzeugs aufgesetzt werden kann. Ferner ist es auch möglich, dass die Überladevorrichtung selbstfahrend, also als Kraftfahrzeug, ausgebildet ist.

Schließlich sieht eine weitere Ausführungsform der Erfindung vor, dass die Überladevorrichtung einen Anschluss für einen Nebenantrieb, insbesondere für eine Zapfwelle eines Traktors, aufweist. Dies ist insbesondere dann vorteilhaft, wenn die Überladevorrichtung als Anhänger ausgebildet ist. Über den Anschluss für den besagten Nebenantrieb können sämtliche Aggregate der Überladevorrichtung auf einfache Weise angetrieben werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in Alleinstellung oder in anderen Kombinationen verwendbar, ohne den Rahmen der Erfindung zu verlassen.

Die Zeichnung zeigt in:
- Fig. 1: eine Perspektivansicht einer ersten Ausführungsform einer mittels eines Traktors gezogenen Überladevorrichtung zum Aufsammeln und Übergeben von Erntegut an einen Transportwagen, welche eine verschwenkbare Einheit zum Aufnehmen des Ernteguts vom Boden sowie einen Zwischenspeicher zum Aufnehmen des Ernteguts aufweist, wobei die verschwenkbare Einheit eine mit Aufnahmezinken versehene Walze zum Aufsammeln des Ernteguts vom Boden umfasst;
- Fig. 2: eine weitere Perspektivansicht der ersten Ausführungsform der Überladevorrichtung, wobei die verschwenkbare Einheit in ihrer nach oben sowie seitlich angeklappten Verstauposition angeordnet ist;
- Fig. 3: eine Seitenansicht der mittels des Traktors gezogenen ersten Ausführungsform der Überladevorrichtung;
- Fig. 4: eine seitliche Detailansicht von dem in Fig. 3 gekennzeichneten Bereich A, wobei ein Förderband der verschwenkbaren Einheit dargestellt ist, mittels welcher aufgenommenes Erntegut in Richtung einer Presse befördert wird, hinter welcher ein Schneidrotor zum Zerkleinern des Ernteguts angeordnet ist;
- Fig. 5: eine Seitenansicht der Überladevorrichtung gemäß der in Fig. 3 gekennzeichneten Schnittebene B-B;
- Fig. 6: eine Detailansicht von dem in Fig. 5 gekennzeichneten Bereich C, wobei die Presse und der Schneidrotor vergrößert dargestellt sind;
- Fig. 7: eine Perspektivansicht einer zweiten Ausführungsform der Überladevorrichtung, welche wiederum mittels eines Traktors gezogen wird, wobei diese Ausführungsform sich von der ersten Ausführungsform der Überladevorrichtung dadurch unterscheidet, dass die verschwenkbare Einheit ein Mähwerk aufweist; und in
- Fig. 8: eine weitere Perspektivansicht der zweiten Ausführungsform der Überladevorrichtung, wobei die verschwenkbare Einheit mit dem Mähwerk in ihrer nach oben sowie seitlich angeklappten Verstauposition dargestellt ist.

In den Figuren sind gleiche oder funktionsgleiche Elemente mit den gleichen Bezugszeichen versehen worden.

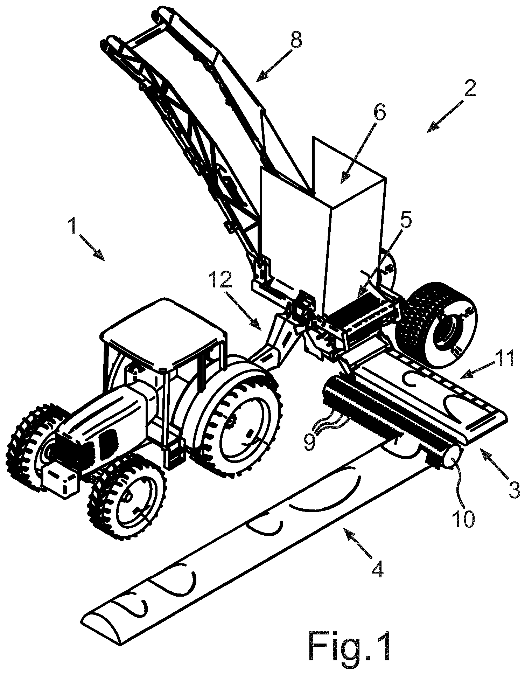

Eine mittels eines Traktors 1 gezogene erste Ausführungsform einer Überladevorrichtung 2 ist in einer Perspektivansicht in Fig. 1 gezeigt. Die Überladevorrichtung 2 umfasst eine verschwenkbare Einheit 3 zum seitlich versetzten Aufnehmen von Erntegut 4 vom Boden und zum Befördern des Ernteguts 4 zu einer zum Zerkleinern des Ernteguts 4 ausgelegten Zerkleinerungseinheit 5. Die verschwenkbare Einheit 3 kann zwischen einer hier dargestellten, in Richtung des Bodens nach unten sowie seitlich ausgeklappten Gebrauchsposition und einer nach oben sowie seitlich angeklappten Verstauposition verschwenkt werden.

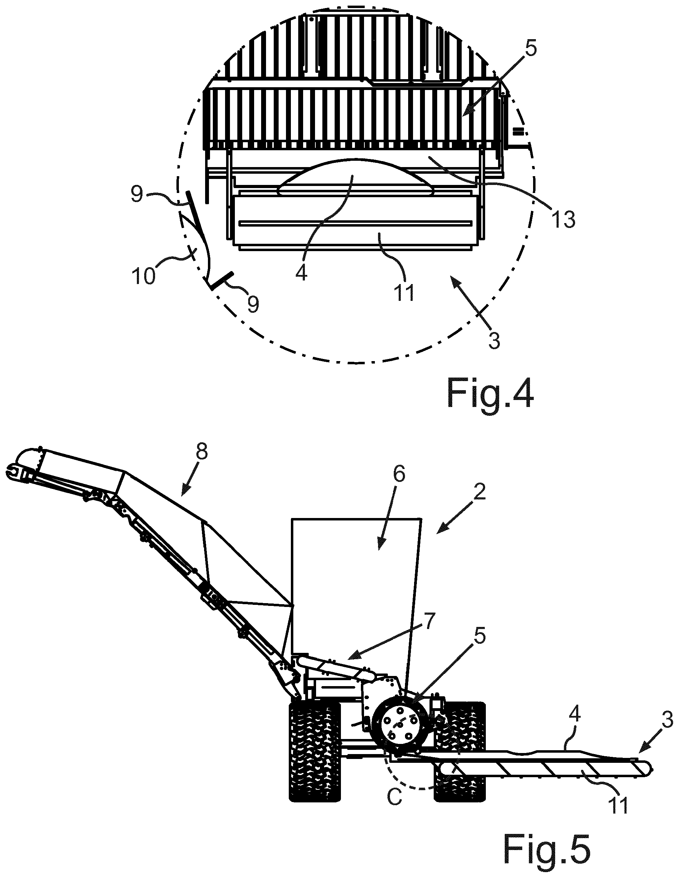

Die Überladevorrichtung 2 umfasst des Weiteren einen Zwischenspeicher 6 zum Aufnehmen des zerkleinerten Ernteguts 4. Im Zwischenspeicher 6 ist zudem noch eine erst in Fig. 5 erkennbare Fördereinrichtung 7 vorgesehen, mittels welcher das im Zwischenspeicher 6 aufgenommene zerkleinerte Erntegut 4 in Richtung einer Überladeeinheit 8 der Überladevorrichtung 2 befördert werden kann. Die Überladeeinheit 8 dient dazu, das zerkleinerte Erntegut in einen hier nicht dargestellten Laderaum eines seitlich neben der Überladevorrichtung 2 angeordneten Transportwagens, insbesondere über eine Ladraumwand des Laderaums hinweg, zu befördern.

Im vorliegend gezeigten Beispiel ist das Erntegut 4 bereits gemäht worden, wobei das Erntegut 4 in Form einer sogenannten Schwad auf dem Boden angeordnet ist. Dadurch, dass die verschwenkbare Einheit 3 in die hier dargestellte nach unten sowie seitlich ausgeklappte Gebrauchsposition verschwenkt werden kann, kann der Traktor 1 seitlich neben der Schwad 4 fahren, während mittels der verschwenkbaren Einheit 3 das Erntegut 4 aufgenommen wird. Zum eigentlichen Aufnehmen des Ernteguts 4 vom Boden umfasst die verschwenkbare Einheit 3 eine mit Aufnahmezinken 9 versehene Walze 10. Die Walze 10 wird zum Aufnehmen des Ernteguts 4 in Rotation versetzt, wobei die Aufnahmezinken 9 das Erntegut 4 aufnehmen und durch die Rotationsbewegung der Walze 10 das Erntegut 4 auf ein Förderband 11 der verschwenkbaren Einheit 3 befördern.

Vorzugsweise werden die Walze 10 und das Förderband 11 derart miteinander gekoppelt betrieben, dass das Förderband 11 angetrieben wird, sobald die Walze 10 angetrieben und somit in Rotation versetzt wird. Das auf das Förderband 11 beförderte Erntegut 4 wird dann in Richtung des Zwischenspeichers 6 und somit in Richtung der Zerkleinerungseinheit 5 befördert.

Da die Zerkleinerungseinheit 5 etwas oberhalb von der nach unten geschwenkten Einheit 3 angeordnet ist, weist das Förderband 11 vorzugsweise an seinem der Zerkleinerungseinheit 5 zugewandten Ende eine nach schräg oben angestellte Formgebung auf. Dadurch kann das Erntegut 4 besonders einfach der Zerkleinerungseinheit 5 zugeführt werden.

Innerhalb einer Deichsel 12 der als Anhänger ausgebildeten Überladevorrichtung 2 kann eine hier nicht näher dargestellte Gelenkwelle angeordnet sein, welche an einer hier ebenfalls nicht erkennbaren Zapfwelle des Traktors 1 angeschlossen werden kann. Diese Gelenkwelle kann dann wiederum dafür verwendet werden, die Zerkleinerungseinheit 5 anzutreiben. Dabei kann beispielsweise noch ein Getriebe zwischengeschaltet sein, um die Zerkleinerungseinheit 5 anzutreiben. Die Zapfwelle des Traktors 1 kann zudem auch beispielsweise dafür genutzt werden, um das Förderband 11, die Walze 10 und sämtliche anderen anzutreibenden Teile der Überladevorrichtung 2 anzutreiben.

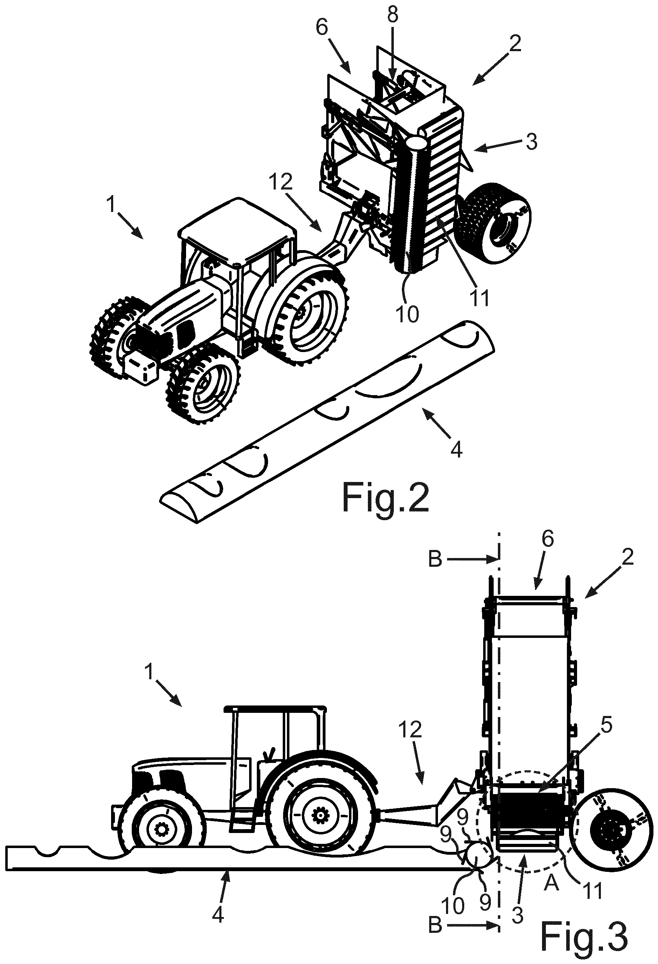

In Fig. 2 ist die mittels des Traktors 1 gezogene erste Ausführungsform der Überladevorrichtung 2 in einer weiteren Perspektivansicht gezeigt. Die verschwenkbare Einheit 3 ist dabei in ihrer nach oben sowie seitlich angeklappten Verstauposition angeordnet. Des Weiteren wurde die Überladeeinheit 8 ebenfalls in eine eingeklappte Nichtgebrauchsstellung bewegt. Die Überladeeinheit 8 kann beispielsweise mehrere relativ zueinander einklappbare Segmente aufweisen, sodass die Überladeeinheit 8 von der in Fig. 1 gezeigten ausgeklappten Überladestellung in die hier in Fig. 2 dargestellte eingeklappte Nichtgebrauchsstellung bewegt werden kann. Dafür können beispielsweise mehrere nicht näher bezeichnete Hydraulikzylinder an der Überladeeinheit 8 angeordnet sein, sodass die Überladeeinheit je nach Bedarf zwischen der hier gezeigten eingeklappten Nichtgebrauchsstellung und der in Fig. 1 gezeigten ausgeklappten Überladestellung positionierbar ist.

Wie zu erkennen, befindet sich die Überladeeinheit 8 in ihrer eingeklappten Nichtgebrauchsstellung innerhalb des Zwischenspeichers 6 der Überladevorrichtung 2, sodass die Überladeeinheit 8 besonders kompakt aufgenommen werden kann. Durch das seitliche Heranklappen und Hochschwenken der verschwenkbaren Einheit 3 sowie durch die beschriebene Verstauung der Überladeeinheit 8 innerhalb des Zwischenspeichers 6 kann die Überladevorrichtung 2 insbesondere problemlos auch über öffentliche Straßen bewegt werden, da die Überladevorrichtung 2 durch Einklappen bzw. Heranklappen der verschwenkbaren Einheit 3 sowie der Überladeeinheit 8 sowohl in Querrichtung als auch in Hochrichtung besonders kompakt baut.

In Fig. 3 ist die mittels des Traktors 1 gezogene erste Ausführungsform der Überladevorrichtung 2 in einer Seitenansicht gezeigt, und zwar während die verschwenkbare Einheit 3 in ihrer nach unten und seitlich eingeklappten Gebrauchsposition angeordnet worden ist, um das Erntegut 4 aufzunehmen. Die mit den Aufnahmezinken 9 versehene Walze 10 fährt über das aufzunehmende Erntegut 4 und befördert dabei das Erntegut 4 auf das Förderband 11, mittels welchem das Erntegut 4 weiter zur Zerkleinerungseinheit 5 befördert wird.

In Fig. 4 ist der in Fig. 3 gekennzeichnete Bereich A in einer Detailansicht gezeigt. In dieser Darstellung ist nochmals gut das auf dem Förderband 11 der verschwenkbaren Einheit 3 aufgenommene Erntegut 4 zu erkennen, während dieses in Richtung der Zerkleinerungseinheit 5 befördert wird. Im vorliegend gezeigten Fall weist die Zerkleinerungseinheit 5 eine mit Förderzinken versehende rotierbare Walze auf, welche mit feststehenden Schneidmessern zusammenwirkt. Die Walze 5 weist an ihrem Außenumfang eine Vielzahl der hier nicht näher bezeichneten Förderzinken auf, mittels welchen das Erntegut 4 in Richtung der hier nicht näher bezeichneten feststehenden Schneidmesser befördert wird, welche vorzugsweise in jeweiligen Kanälen angeordnet sind. Die Schneidmesser zerkleinern dann das Erntegut 4. Bezogen auf die Förderrichtung des Förderbands 11 ist der Zerkleinerungseinheit 5 noch eine hydraulische Presse 13 vorgelagert. Bevor das Erntegut 4 zur Zerkleinerungseinheit 5 gelangt, wird das Erntegut 4 mittels der hydraulischen Presse 13 verdichtet. Dadurch kann die Schnittqualität des Ernteguts 4 gesteigert werden.

In Fig. 5 ist die erste Ausführungsform der Überladevorrichtung 1 entlang der in Fig. 3 gekennzeichneten Schnittebene B-B gezeigt. In dieser Schnittdarstellung ist die zuvor bereits erwähnte Fördereinrichtung 7 zu erkennen, welche innerhalb des Zwischenspeichers 6 angeordnet ist. Die Fördereinrichtung 7 kann beispielsweise einen Kratzboden aufweisen. Gemäß der vorliegenden Darstellung wird also das Erntegut 4 mittels des Förderbands 11 zunächst nach links in Richtung der hier nicht näher gekennzeichneten hydraulischen Presse 13 und von dort aus weiter in Richtung der als Schneidrotor ausgebildeten Zerkleinerungseinheit 5 befördert.

Von der Zerkleinerungseinheit 5 gelangt dann das zerkleinerte bzw. zerschnittene Erntegut 4 in den Zwischenspeicher 6 und kann mittels der Fördereinrichtung 7 weiter nach links zur ausgefahrenen Überladeeinheit 8 bewegt werden. Die Überladeeinheit 8 kann beispielsweise ein hier nicht näher gekennzeichnetes integriertes Förderband aufweisen, mittels welchem das zerkleinerte Erntegut 4 zu einem hier nicht dargestellten Transportwagen transportiert werden kann. So kann das zerkleinerte Erntegut 4 aus dem Zwischenspeicher 6 beispielsweise über eine Ladraumwand eines Laderaums des Transportwagens hinweg in diesen befördert werden.

Das aus der Überladevorrichtung 2 und dem Traktor 1 gebildete Gespann kann also neben einem Transportwagen herfahren, während das Erntegut 4 vom Boden aufgesammelt, verdichtet, zerkleinert und dann in den Transportwagen befördert wird. Ist der Laderaum des Transportwagens beispielsweise vollständig befüllt worden, so kann die Überladevorrichtung 2 aufgrund ihres Zwischenspeichers 6 weiterhin Erntegut 4 aufnehmen und Zwischenlagern ohne das Erntegut 4 an einen Transportwagen übergeben zu müssen.

Das aus dem Traktor 1 und der Überladevorrichtung 2 gebildete Gespann kann also weiterfahren, während beispielsweise ein weiterer noch leerer Transportwagen heranfährt und sich während der Fahrt neben der Überladevorrichtung 2 positioniert. Sobald der Transportwagen mit seinem Laderaum seitlich neben der Überladevorrichtung 2 an passender Stelle unterhalb von der Überladeeinheit 8 positioniert worden ist, kann beispielsweise das besagte Förderband, welches in die Überladeeinheit 8 integriert ist, zusammen mit der Fördereinrichtung 7 im Zwischenspeicher 6 aktiviert werden, um das zwischenzeitlich im Zwischenspeicher 6 zwischengelagerte und geschnittene Erntegut 4 dem Laderaum des noch leeren Transportwagens zuzuführen.

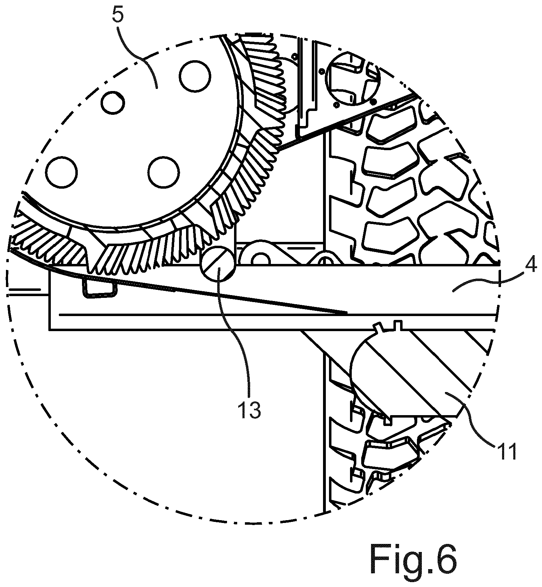

In Fig. 6 ist der in Fig. 5 gekennzeichnete Bereich C in einer vergrößerten Detailansicht gezeigt. In der vorliegenden Detailansicht sind die hydraulische Presse 13 und die als Schneidrotor ausgebildete Zerkleinerungseinheit 5 nochmals gut zu erkennen. Gemäß der vorliegenden Darstellung wird das aufgenommene Erntegut 4 mittels des Förderbands 11 der verschwenkbaren Einheit 3 nach links in Richtung der hydraulischen Presse 13 befördert, mittels welcher das Erntegut 4 zunächst verdichtet und anschließend erst mittels der Zerkleinerungseinheit 5 zerkleinert bzw. zerschnitten wird.

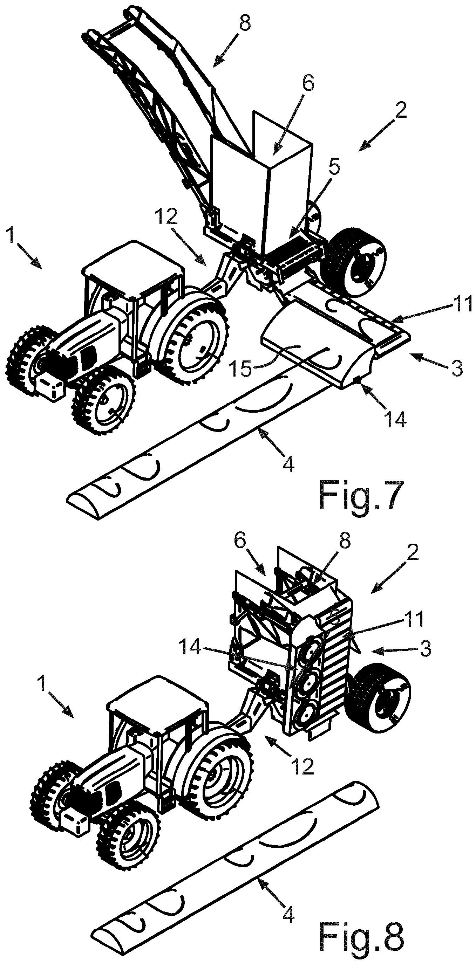

In Fig. 7 ist eine zweite Ausführungsform der Überladevorrichtung 2 in einer Perspektivansicht gezeigt, während diese mittels des Traktors 1 gezogen wird. Die zweite Ausführungsform der Überladevorrichtung 2 unterscheidet sich von der ersten Ausführungsform der Überladevorrichtung 2 lediglich dadurch, dass die verschwenkbare Einheit 3 statt der mit den Aufnahmezinken 9 versehenen Walze 10 ein Mähwerk 14 aufweist, wobei lediglich eine Abdeckung 15 des Mähwerks 14 zu erkennen ist, da die verschwenkbare Einheit 3 in ihrer in Richtung des Bodens nach unten sowie seitlich ausgeklappten Gebrauchsstellung dargestellt ist.

Die zweite Ausführungsform der Überladevorrichtung 2 ist also aufgrund des Mähwerks 14 zusätzlich noch dazu in der Lage, das aufzunehmende Erntegut 4 selbstständig zu mähen. Das Mähwerk 14 befördert dann das gemähte Erntegut 4 wiederum auf das Förderband 11 der verschwenkbaren Einheit 3, von wo aus es in der bereits beschriebenen Weise in den Zwischenspeicher 6 gelangt.

In Fig. 8 ist die mittels des Traktors 1 gezogene zweite Ausführungsform der Überladevorrichtung 2 in einer weiteren Perspektivansicht gezeigt, wobei die verschwenkbare Einheit 3 in ihrer nach oben sowie seitlich angeklappten Verstauposition angeordnet ist. Die Überladeeinheit 8 ist, wie im Zusammenhang mit Fig. 2 bereits beschrieben, ebenfalls wiederum in ihrer eingeklappten Nichtgebrauchsstellung angeordnet worden. In der vorliegenden Darstellung wird die Sicht auf die Unterseite des Mähwerks 14 freigegeben.

Bezogen auf die bestimmungsgemäße Fahrtrichtung war die Überladeinheit 8 immer rechts vom Zwischenspeicher 6 und die verschwenkbare Einheit 3 immer links vom Zwischenspeicher 6 angeordnet dargestellt worden. Natürlich kann auch eine spiegelverkehrte Anordnung erfolgen, bei welcher die Überladeinheit 8 links und die verschwenkbare Einheit 3 rechts vom Zwischenspeicher 6 angeordnet sind. Wesentlich ist, dass die Überladeeinheit 8 und die verschwenkbare Einheit 3 auf gegenüberliegenden Seiten des Zwischenspeichers 6 angeordnet sind.

### BEZUGSZEICHENLISTE:

1 Traktor
2 Überladevorrichtung
3 verschwenkbare Einheit
4 Erntegut
5 Zerkleinerungseinheit
6 Zwischenspeicher
7 Fördereinrichtung
8 Überladeeinheit
9 Aufnahmezinken
10 Walze
11 Förderband
12 Deichsel
13 Presse
14 Mähwerk
15 Abdeckung

## Patentansprüche

1. Überladevorrichtung (2) zum seitlich versetzten Aufsammeln und Übergeben von Erntegut (4), insbesondere von halmgutartiger Biomasse, an einen Transportwagen umfassend
- eine verschwenkbare Einheit zum Befördern des Ernteguts (4) zu einer zum Zerkleinern des Ernteguts ausgelegten Zerkleinerungseinheit (5), wobei die verschwenkbare Einheit (3) zwischen einer in Richtung des Bodens nach unten sowie seitlich ausgeklappten Gebrauchsposition und einer nach oben sowie seitlich angeklappten Verstauposition verschwenkbar ist;
- einen Zwischenspeicher (6) zum Aufnehmen des zerkleinerten Ernteguts (4);
- eine im Zwischenspeicher (6) angeordnete Fördereinrichtung (7) zum Befördern des zerkleinerten Ernteguts (4) aus dem Zwischenspeicher (6) zu einer Überladeeinheit (8) der Überladevorrichtung (2), mittels welcher das zerkleinerte Erntegut (4) in einen Laderaum des seitlich neben der Überladevorrichtung (2) angeordneten Transportwagens, insbesondere über eine Laderaumwand des Laderaums hinweg, beförderbar ist,
**dadurch gekennzeichnet, dass** die verschwenkbare Einheit (3) zusätzlich zum seitlich versetzten Aufnehmen des Ernteguts (4) vom Boden eingerichtet ist.

2. Überladevorrichtung (2) nach Anspruch 1,
**dadurch gekennzeichnet, dass**
die verschwenkbare Einheit (3) eine Fördereinrichtung (11) zum Befördern des Ernteguts (4) zur Zerkleinerungseinheit (5) aufweist.

3. Überladevorrichtung (2) nach Anspruch 2,
**dadurch gekennzeichnet, dass**
in der Gebrauchsstellung der verschwenkbaren Einheit (3) die Fördereinrichtung (11) der verschwenkbaren Einheit (3) und die im Zwischenspeicher (6) angeordnete Fördereinrichtung miteinander fluchten.

4. Überladevorrichtung (2) nach einem der vorhergehenden Ansprüche,
**dadurch gekennzeichnet, dass**
die im Zwischenspeicher (6) angeordnete Fördereinrichtung (7) einen im Bereich einer Ladefläche des Zwischenspeichers (6) angeordneten Kratzboden aufweist, mittels welchem das im Zwischenspeicher (6) aufgenommene zerkleinerte Erntegut (4) in Richtung der Überladeeinheit (8) beförderbar ist.

5. Überladevorrichtung (2) nach einem der vorhergehenden Ansprüche,
**dadurch gekennzeichnet, dass**
die im Zwischenspeicher (6) angeordnete Förderreinrichtung wenigstens eine an einer der Überladeinheit (8) zugewandten Seite des Zwischenspeichers (6) angeordnete Dosierwalze aufweist, mittels welcher das im Zwischenspeicher (6) aufgenommene zerkleinerte Erntegut (4) in Richtung der Überladeinheit (8) beförderbar ist

6. Überladevorrichtung (2) nach einem der vorhergehenden Ansprüche,
**dadurch gekennzeichnet, dass**
die im Zwischenspeicher (6) angeordnete Förderreinrichtung eine den Zwischenspeicher (6) begrenzende Wand aufweist, welche in Richtung der Überladeinheit (8) aus- und einfahrbar ist.

7. Überladevorrichtung (2) nach einem der vorhergehenden Ansprüche,
**dadurch gekennzeichnet, dass**
der Zerkleinerungseinheit (5) eine Presse (13) zum Verdichten des Ernteguts (4) vorgeschaltet ist.

8. Überladevorrichtung (2) nach Anspruch 7,
**dadurch gekennzeichnet, dass**
die Presse (13) zum Verdichten des Ernteguts (4) in Richtung der Fördereinrichtung (11) der verschwenkbaren Einheit (3) bewegbar ist.

9. Überladevorrichtung (2) nach einem der vorhergehenden Ansprüche,
**dadurch gekennzeichnet, dass**
die verschwenkbare Einheit (3) eine mit Aufnahmezinken (9) versehene Walze (10) zum Aufsammeln des Ernteguts (4) vom Boden aufweist.

10. Überladevorrichtung (2) nach einem der vorhergehenden Ansprüche,
**dadurch gekennzeichnet, dass**
die verschwenkbare Einheit (3) ein Mähwerk (14) zum Mähen und anschließenden Aufnehmen des Ernteguts (4) vom Boden aufweist.

11. Überladevorrichtung (2) nach einem der vorhergehenden Ansprüche,
**dadurch gekennzeichnet, dass**
die Zerkleinerungseinheit (5) eine mit Förderzinken versehende rotierbare Walze aufweist, welche mit feststehenden Schneidmessern, die vorzugsweise in Kanälen angeordnet sind, zusammenwirkt.

12. Überladevorrichtung (2) nach einem der vorhergehenden Ansprüche,
**dadurch gekennzeichnet, dass**
die Zerkleinerungseinheit (5) einen Häcksler aufweist.

13. Überladevorrichtung (2) nach einem der vorhergehenden Ansprüche,
**dadurch gekennzeichnet, dass**
die Überladeeinheit (8) in einer eingeklappten Nichtgebrauchsstellung und in einer ausgeklappten Überladestellung positionierbar ist.

14. Überladevorrichtung (2) nach einem der vorhergehenden Ansprüche,
**dadurch gekennzeichnet, dass**
die Überladeeinheit (8) zum Befördern des zerkleinerten Ernteguts (4) in den Laderaum des Transportwagens ein Förderband, einen Schneckenförderer und/oder ein Gebläse mit einem daran angeschlossenen Beförderungsrohr aufweist.

15. Überladevorrichtung (2) nach einem der vorhergehenden Ansprüche,
**dadurch gekennzeichnet, dass**
die Überladevorrichtung (2) ein Anhänger, ein Aufbau für ein Fahrzeug oder ein Kraftfahrzeug ist.

16. Überladevorrichtung (2) nach einem der vorhergehenden Ansprüche,
**dadurch gekennzeichnet, dass**
die Überladevorrichtung (2) einen Anschluss für einen Nebenantrieb, insbesondere für eine Zapfwelle eines Traktors (1), aufweist.

## Claims

1. Load transfer device (2) for the laterally offset collection and transfer of harvested material (4), in particular of stalk-like biomass, to a transport vehicle, comprising
- a pivotable unit for conveying the harvested material (4) to a shredding unit (5) designed to shred the harvested material, wherein the pivotable unit (3) is pivotable between a use position folded out downwards and laterally in direction of the ground and a stowing position folded in upwards and laterally;
- an intermediate store (6) for receiving the shredded harvested material (4);
- a conveying apparatus (7) arranged in the intermediate store (6) for conveying the shredded harvested material (4) out of the intermediate store (6) to a load transfer unit (8) of the load transfer device (2), by means of which the shredded harvested material (4) can be conveyed into a load compartment of the transport vehicle arranged laterally beside the load transfer device (2), in particular over a load compartment wall of the load compartment,
**characterised in that** the pivotable unit (3) is additionally configured to pick up the harvested material (4) from the ground in a laterally offset manner.

2. Load transfer device (2) according to claim 1,
**characterised in that**
the pivotable unit (3) has a conveying apparatus (11) for conveying the harvested material (4) to the shredding unit (5).

3. Load transfer device (2) according to claim 2,
**characterised in that**
in the position of use of the pivotable unit (3), the conveying apparatus (11) of the pivotable unit (3) and the conveying apparatus arranged in the intermediate store (6) are aligned with one another.

4. Load transfer device (2) according to any of the preceding claims,
**characterised in that**
the conveying apparatus (7) arranged in the intermediate store (6) has a scraper floor arranged in the region of a loading surface of the intermediate store (6), by means of which the shredded harvested material (4) received in the intermediate store (6) can be conveyed in the direction of the load transfer unit (8).

5. Load transfer device (2) according to any of the preceding claims,
**characterised in that**
the conveying apparatus arranged in the intermediate store (6) has at least one metering roller which is arranged on a side of the intermediate store (6) facing the load transfer unit (8) and by means of which the shredded harvested material (4) received in the intermediate store (6) can be conveyed in direction of the load transfer unit (8).

6. Load transfer device (2) according to any of the preceding claims,
**characterised in that**
the conveying apparatus arranged in the intermediate store (6) has a wall which delimits the intermediate store (6) and which can be extended and retracted in direction of the load transfer unit (8).

7. Load transfer device (2) according to any of the preceding claims,
**characterised in that**
a press (13) for compacting the harvested material (4) is connected upstream of the shredding unit (5).

8. Load transfer device (2) according to claim 7,
**characterised in that**
the press (13) for compacting the harvested material (4) is movable in direction of the conveying apparatus (11) of the pivotable unit (3).

9. Load transfer device (2) according to any of the preceding claims,
**characterised in that**
the pivotable unit (3) has a roller (10) provided with pick-up tines (9) for collecting the harvested material (4) from the ground.

10. Load transfer device (2) according to any of the preceding claims,
**characterised in that**
the pivotable unit (3) has a mowing attachment (14) for mowing and subsequently picking up the harvested material (4) from the ground.

11. Load transfer device (2) according to any of the preceding claims,
**characterised in that**
the shredding unit (5) has a rotatable roller provided with conveyor tines, which roller cooperates with fixed cutting blades which are preferably arranged in channels.

12. Load transfer device (2) according to any of the preceding claims,
**characterised in that**
the shredding unit (5) has a chopper.

13. Load transfer device (2) according to any of the preceding claims,
**characterised in that**
the load transfer unit (8) is positionable in a folded-in non-use position and in a folded-out transfer position.

14. Load transfer device (2) according to any of the preceding claims,
**characterised in that**
the load transfer unit (8), for conveying the shredded harvested material (4) into the load compartment of the transport vehicle, has a conveyor belt, a screw conveyor and/or a blower with a conveying pipe connected thereto.

15. Load transfer device (2) according to any of the preceding claims,
**characterised in that**
the load transfer device (2) is a trailer, a body for a vehicle or a motor vehicle.

16. Load transfer device (2) according to any of the preceding claims,
**characterised in that**
the load transfer device (2) has a connection for an auxiliary drive, in particular for a power take-off of a tractor (1).

## Revendications

1. Dispositif de transbordement (2) destiné au ramassage décalé latéralement et au transfert de produit de récolte (4), en particulier de la biomasse similaire à de la paille, sur un chariot de transport comprenant
- une unité pivotante destinée à transporter le produit de récolte (4) vers une unité de broyage (5) conçue pour broyer le produit de récolte, dans laquelle l'unité pivotante (3) peut pivoter entre une position d'utilisation dépliée en direction du sol vers le bas, ainsi que latéralement et une position de rangement dépliée vers le bas, ainsi que latéralement ;
- un dispositif de stockage intermédiaire (6) destiné à recueillir le produit de récolte (4) broyé ;
- un appareil de convoyage (7) disposé dans le dispositif de stockage intermédiaire (6) destiné à transporter le produit de récolte (4) broyé du dispositif de stockage intermédiaire (6) vers une unité de transbordement (8) du dispositif de transbordement (2), au moyen de laquelle le produit de récolte (4) broyé peut être transporté dans un espace de chargement du chariot de transport disposé latéralement à côté du dispositif de transbordement (2), en particulier au-dessus d'une paroi de l'espace de chargement de l'espace de chargement,
**caractérisé en ce que** l'unité pivotante (3) est agencée en outre pour recueillir de manière décalée latéralement le produit de récolte (4) du sol.

2. Dispositif de transbordement (2) selon la revendication 1,
**caractérisé en ce que**
l'unité pivotante (3) présente un appareil de convoyage (11) destiné à transporter le produit de récolte (4) vers l'unité de broyage (5).

3. Dispositif de transbordement (2) selon la revendication 2,
**caractérisé en ce que**
dans la position d'utilisation de l'unité pivotante (3), l'appareil de convoyage (11) de l'unité pivotante (3) et l'appareil de convoyage disposé dans le dispositif de stockage intermédiaire (6) sont alignés.

4. Dispositif de transbordement (2) selon l'une quelconque des revendications précédentes,
**caractérisé en ce que**
l'appareil de convoyage (7) disposé dans le dispositif de stockage intermédiaire (6) présente un fond racleur disposé dans la zone d'une surface de chargement du dispositif de stockage intermédiaire (6), au moyen duquel le produit de récolte (4) broyé recueilli dans le dispositif de stockage intermédiaire (6) peut être transporté en direction de l'unité de transbordement (8).

5. Dispositif de transbordement (2) selon l'une quelconque des revendications précédentes,
**caractérisé en ce que**
l'appareil de convoyage disposé dans le dispositif de stockage intermédiaire (6) présente au moins un rouleau doseur disposé sur un côté orienté vers l'unité de transbordement (8) du dispositif de stockage intermédiaire (6), au moyen duquel le produit de récolte (4) broyé recueilli dans le dispositif de stockage intermédiaire (6) peut être transporté en direction de l'unité de transbordement (8).

6. Dispositif de transbordement (2) selon l'une quelconque des revendications précédentes,
**caractérisé en ce que**
l'appareil de convoyage disposé dans le dispositif de stockage intermédiaire (6) présente une paroi délimitant le dispositif de stockage intermédiaire (6), laquelle peut être déployée et rétractée en direction de l'unité de transbordement (8).

7. Dispositif de transbordement (2) selon l'une quelconque des revendications précédentes,
**caractérisé en ce que**
une presse (13) est montée en amont de l'unité de broyage (5) pour compacter le produit de récolte (4).

8. Dispositif de transbordement (2) selon la revendication 7,
**caractérisé en ce que**
la presse (13) pour compacter le produit de récolte (4) peut être déplacée en direction de l'appareil de convoyage (11) de l'unité pivotante (3).

9. Dispositif de transbordement (2) selon l'une quelconque des revendications précédentes,
**caractérisé en ce que**
l'unité pivotante (3) présente un rouleau (10) muni de pointes de réception (9) pour ramasser le produit de récolte (4) du sol.

10. Dispositif de transbordement (2) selon l'une quelconque des revendications précédentes,
**caractérisé en ce que**
l'unité pivotante (3) présente une faucheuse (14) pour faucher et recueillir ensuite le produit de récolte (4) du sol.

11. Dispositif de transbordement (2) selon l'une quelconque des revendications précédentes,
**caractérisé en ce que**
l'unité de broyage (5) présente un rouleau pouvant pivoter muni de pointes de convoyage, laquelle coopère avec des lames de coupe fixes, qui sont disposées de préférence dans des canaux.

12. Dispositif de transbordement (2) selon l'une quelconque des revendications précédentes,
**caractérisé en ce que**
l'unité de broyage (5) présente une hacheuse.

13. Dispositif de transbordement (2) selon l'une quelconque des revendications précédentes,
**caractérisé en ce que**
l'unité de transbordement (8) peut être positionnée dans une position de nonutilisation repliée et dans une position de transbordement dépliée.

14. Dispositif de transbordement (2) selon l'une quelconque des revendications précédentes,
**caractérisé en ce que**
l'unité de transbordement (8) pour transporter le produit de récolte (4) broyé dans l'espace de chargement du chariot de transport présente une bande convoyeuse, un convoyeur à vis et/ou un ventilateur avec un tube de transport raccordé à celui-ci.

15. Dispositif de transbordement (2) selon l'une quelconque des revendications précédentes,
**caractérisé en ce que**
le dispositif de transbordement (2) est une remorque, une structure pour un véhicule ou un véhicule automobile.

16. Dispositif de transbordement (2) selon l'une quelconque des revendications précédentes,
**caractérisé en ce que**
le dispositif de transbordement (2) présente un raccordement pour un entraînement auxiliaire, en particulier pour un arbre de prise de force d'un tracteur (1).
